# EUROPÄISCHE PATENTSCHRIFT

(11) **EP 2 780 134 B1**
(45) Veröffentlichungstag und Bekanntmachung des Hinweises auf die Patenterteilung: **16.09.2015**
(21) Anmeldenummer: 12788174.6
(22) Anmeldetag: 12.11.2012
(51) Int. Cl.: B23K 26/40, B23K 26/00, C03C 23/00, B23K 26/18

(54) **VERFAHREN ZUM MATERIALABTRAG AN GLASOBERFLÄCHEN**
METHOD FOR THE REMOVAL OF MATERIAL ON GLASS SURFACES
PROCÉDÉ D'ENLÈVEMENT DE MATIÈRE SUR DES SURFACES DE VERRE

(30) Priorität: 15.11.2011 DE 102011055364
(43) Veröffentlichungstag der Anmeldung: 24.09.2014
(73) Patentinhaber: Hochschule für Angewandte Wissenschaft und Kunst Hildesheim/Holzminden/Göttingen, 31134 Hildesheim (DE); Laser-Laboratorium Göttingen E.V., 37077 Göttingen (DE)
(72) Erfinder: VIÖL, Wolfgang, 37139 Adelebsen (DE); WIENEKE, Stephan, 37079 Göttingen (DE); BRÜCKNER, Stephan, 37318 Mackenrode (DE); GERHARD, Christoph, 37133 Friedland (DE); HOFFMEISTER, Jennifer, 37127 Jühnde (DE); IHLEMANN, Jürgen, 37077 Göttingen (DE)
(74) Vertreter: REHBERG HÜPPE + PARTNER
(86) Internationale Anmeldenummer: PCT/EP2012/072374
(87) Internationale Veröffentlichungsnummer: WO 2013/072272

(56) Entgegenhaltungen:
- EP-A1- 0 931 620
- EP-A1- 1 288 169
- EP-A2- 0 079 473
- WO-A1-2008/118365

## Beschreibung

Die Erfindung bezieht sich auf ein Verfahren zum Abtragen von Material von einem Formkörper aus einem SiO₂-basierten Material mit intensivem Licht, wobei das Verfahren die Merkmale des Oberbegriffs des unabhängigen Patentanspruchs 1 aufweist.

Bei dem SiO₂-basierten Material des Formkörpers kann es sich um ein kristallines Material handeln; insbesondere handelt es sich jedoch um Glas. Dass ein Glas SiO₂-basiert ist, schließt nicht aus, dass es Zusätze, insbesondere in Form von Metalloxiden, aufweist.

Bei dem SiO₂-basierten Material handelt es sich ganz insbesondere um im Bereich des sichtbaren Lichts und in weiten Teilen des UV-Lichts transparentes Glas, das zum Beispiel für optische Zwecke und/oder als (sonnen-)lichtdurchlässige Abdeckung verwendet wird.

Bei bis in den UV-Bereich Bereich transparentem Glas oder kristallinem Material besteht eine grundsätzliche Schwierigkeit darin, dass zu seiner Bearbeitung eingesetztes intensives Licht auch im fokussierten Zustand von dem Material an seiner Oberfläche nur zu einem geringen Anteil absorbiert wird und von daher der für das Abtragen von Material beispielsweise mittels sogenannter Laserablation erforderliche hohe Energieeintrag nicht ohne weiteres erreicht wird.

Das zum Abtragen des Materials eingesetzte Licht ist insoweit intensiv, als dass seine Intensität binnen kurzer Zeit einen Eintrag von Energie mit hoher Energieflächendichte in die Oberfläche des Materials ermöglicht. Eine kurze Zeit ist dabei dadurch charakterisiert, dass sie keine oder nur eine unwesentliche Dissipation der eingetragenen Energie ermöglicht.

Bei dem intensiven Licht handelt es sich typischerweise um fokussierte Laserstrahlung. Häufig ist diese Laserstrahlung monochromatisch. Dann kommt es bei der ausreichenden Absorption des intensiven Lichts durch das Material auf seine Absorption speziell bei der Wellenlänge der Laserstrahlung an. Die Wellenlänge des intensiven Lichts kann in den sichtbaren Bereich, insbesondere aber auch in den UV-Bereich fallen.

### STAND DER TECHNIK

Aus der DE 33 26 571 A1 ist ein Verfahren zur Strukturierung von Materialoberflächen mittels Laserstrahlung bekannt, das die Merkmale des Oberbegriffs des unabhängigen Patentanspruchs 1 aufweist. Dabei wird zur Strukturierung solcher Materialien, die an sich mit Laserstrahlung nicht bearbeitet werden können, die zu strukturierende Oberfläche der Strahlungsquelle abgewandt und mit einer Metalloberfläche oder der Oberfläche eines anderen, die Laserstrahlung absorbierenden Materials in Kontakt gebracht. Dieses mit der zu strukturierenden Oberfläche in Kontakt stehende Material absorbiert die Laserstrahlung und überträgt die resultierende Wärmeenergie auf die zu strukturierende Oberfläche. Das dann möglicherweise tatsächlich von der Oberfläche abgetragene Material kann jedoch aufgrund des mit der Oberfläche in Kontakt stehenden absorbierenden Materials nicht ohne weiteres abgeführt werden. Hieraus resultieren schnell Verunreinigungen der zu strukturierenden Oberfläche. Zudem ist die nur indirekte Erwärmung der Oberfläche für einen zielgerichteten und räumlich definierten Abtrag von Material von der Oberfläche ungeeignet.

Ein weiteres Verfahren mit dem Merkmal des Oberbegriffs des unabhängigen Patentanspruchs 1 ist aus der EP 0 079 473 A2 bekannt.

Aus der EP 1 829 837 A1 ist ein Verfahren zur Plasmabehandlung von Glasoberflächen bekannt, wobei durch die Plasmabehandlung der Metall-, insbesondere der Alkali- und/oder Erdalkalianteil in oberflächennahen Bereichen eines Glases reduziert wird. Durch die Abreicherung der Metallionen soll verhindert werden, dass diese durch Diffusions- oder Austauschprozesse aus dem Glas austreten und unerwünschte Wirkungen haben, beispielsweise ein Medikament verunreinigen, das in einem die Glasoberfläche aufweisenden Glasgefäß aufbewahrt wird. Die Reduzierung des Alkali- und Erdalkaligehalts mittels der Plasmabehandlung soll die Glasstruktur möglichst wenig schädigen. Vorzugsweise wird das Plasma bei der Plasmabehandlung in einem wasserstoffhaltigen Prozessgas gezündet. Dabei wird davon ausgegangen, dass es zu einem Austausch von Alkali- und Erdalkaliionen durch Wasserstoffionen in oberflächennahen Bereichen des Glases kommt. Das Plasma kann durch eine hochfrequente Wechselhochspannung, beispielsweise im Rahmen einer dielektrischen Barriere-Entladung oder eines Plasma-Strahl-Verfahrens, erzeugt werden. Die Plasmabehandlung erfolgt bei einem geringen Unterdruck oder etwa bei Atmosphärendruck. Die Temperatur des Glases während der Plasmabehandlung liegt zwischen 50 und 500°C, vorzugsweise zwischen 120 und 400°C. Die Plasmabehandlung dauert typischerweise ein paar Minuten.

Aus der JP 3050140 (A) ist es zur Herstellung von Linsen mit variierendem Brechungsindex bekannt, eine Ausgangsform, die ein Ion zur Erhöhung des Brechungsindexes aufweist, für etwa drei Minuten einem Wasserstoffplasma auszusetzen. Dabei diffundieren Wasserstoffatome in die Ausgangsform über deren Oberflächen ein. Hierdurch wird ein Ionenaustausch mit dem Ion mit hohem Brechungsindex eingeleitet.

Aus der EP 0 931 620 A1 ist ein Laserbearbeitungsverfahren bekannt, bei dem durch ein transparentes zu behandelndes Material hindurch ein Laserstrahl auf ein Target gerichtet wird, das in freiem Abstand zu einer zu bearbeitenden Oberfläche des Materials in einer Vakuumkammer vorgesehen ist. Dabei wird durch die Bestrahlung des Targets ein laserinduziertes Plasma erzeugt, mit dessen Hilfe ein Abtrag von der dem Target zugewandten Oberfläche des transparenten Materials erreicht wird. Dieses Verfahren zählt zu denjenigen, die unter dem Stichwort "Laser-Induced Plasma-Assisted Ablation (LIPAA)" bekannt sind. Bei diesen Verfahren absorbiert das laserinduzierte Plasma erhebliche zusätzliche Energie aus der eingestrahlten Laserstrahlung und kompensiert so eine geringe unmittelbare Absorption der Laserstrahlung durch das zu behandelnde Material. Für eine räumlich hochaufgelöste Strukturierung einer Oberfläche durch Abtrag von Material sind diese Verfahren wegen des indirekten Energieeintrags weniger geeignet.

Aus der EP 0 129 603 A1 ist eine Laserbearbeitungsmaschine bekannt, mit der eine Oberfläche eines Werkstücks unter gleichzeitigem Energieeintrag durch Laserstrahlung und ein Plasma bearbeitet wird. Hier gibt es keinen Hinweis auf die Bearbeitung von Werkstücken aus transparenten Materialien.

Aus Koji Sugioka und Katsumi Midorikawa: "Novel technology for laser precision microfabrication of hard materials", in RIKEN Review No. 32 (Januar 2001): Focused on Laser Precision Microfabrication (LPM2000), Seiten 36-42, ist eine hybride Laserbearbeitung zur Strukturierung harter Materialien bekannt, zu denen auch transparente SiO₂-basierte Materialien zählen. Dabei wird neben Laserstrahlung, mit der ein eigentlicher Abtrag von einer Oberfläche des Materials hervorgerufen werden soll, großflächig weitere Laserstrahlung mit einer Energiedichte unterhalb der Abtragschwelle auf die jeweilige Oberfläche gerichtet. Hiermit soll das Material an der Oberfläche in Zustände angeregt werden, aus denen heraus ein leichterer Abtrag möglich ist.

J. Hoffmeister et al. verwiesen in einem Poster "Laser-Plasma-Hybridbearbeitung von Quarzglasoberflächen" bei der Veranstaltung "Funktionalisierung von Oberflächen" im Rahmen der Workshopreihe "Innovationen & Trends in der Messtechnik", Measurement Valley e.V., Göttingen, 10.02.2011, auf die Entwicklung eines Laser-Plasma-Hybridverfahrens, das neben der Ablation schlecht bearbeitbarer Substrate wie Borsilikatglas und Quarzglas eine Vielzahl vorteilhafter fertigungstechnologischer Aspekte ermöglichen soll. Hierzu zählen die Realisierung hinreichender Oberflächengüten am ablatierten Substrat und die Erhöhung der Taktzeiten bei der Ablation bzw. die Strukturierung spezieller Oberflächen durch Herabsetzen der Ablationsschwelle mittels Plasmabehandlung. Bei Anwendung des Hybridverfahrens zur Ablation von Quarzgläsern soll eine Verringerung der benötigten Schwellwertenergie für den Materialabtrag um den Faktor 4,6 und die Erhöhung der Abtragtiefe pro Puls um 46 % erreicht worden sein. Details zu der Plasmabehandlung offenbarte das Poster nicht.

Aus der US 2003/0172679 A2 ist es bekannt, optische Gläser zur Homogenisierung ihres Brechungsindex durch Einbringen von Wasserstoff zu behandeln. Hierzu werden die Gläser Wasserstoffgas bei hohem Druck und hoher Temperatur ausgesetzt.

Die DE 197 50 167 A1 offenbart ein Verfahren zur Herstellung integrierter Schaltkreise. Dabei wird ein Siliziumsubstrat in einer Schicht unterhalb eines Oberflächenbereichs in seiner Beschaffenheit verändert. Zu diesem Zweck erfolgt eine Implantation von Wasserstoffionen. Die mittels Implantation hergestellte vergrabene Wasserstoffschicht soll unterhalb der Bauelemente für integrierte Schaltkreise auf dem Siliziumsubstrat liegen. Dazu wird die Wasserstoffschicht in etwa 5 µm Tiefe vorgesehen, was durch eine Ionenimplantation bei einer Energie von etwa 500 keV erzielt wird. Nachdem die integrierten Schaltkreise fertig gestellt worden sind, erfolgt der Schritt des Abtrennens des Oberflächenbereichs des Siliziumsubstrats von dem unterhalb der Wasserstoffschicht gelegenen Teil des Siliziumsubstrats durch Erwärmen der Wasserstoffschicht. Das Erwärmen der Wasserstoffschicht kann mit Hilfe eines Lasers erfolgen, dessen Strahlung überwiegend von der Wasserstoffschicht absorbiert wird. Dadurch dehnt sich der Wasserstoff aus und führt zu einem Aufbrechen des Substrats entlang der Wasserstoffschicht. Um eine über der gesamten Oberfläche möglichst gleichförmige Tiefe der vergrabenen Wasserstoffschicht zu gewährleisten, ist eine überwiegend ebene Topographie der Oberfläche erforderlich. Dabei ist es vorteilhaft, wenn der Schichtaufbau dieser geometrisch ebenen Topographie keine Bestandteile enthält, die die Eindringtiefe der Wasserstoffionen stark beeinflussen. Es sind daher die Dichte, Kernmasse und Elektronenzahl der verwendeten Materialien zu berücksichtigen, wobei Si, SiO₂ und Al bevorzugt sind.

Aus der US 2009/0007933 A1 sind Verfahren zum Abtragen von Schichten und Modifizieren von Oberflächen durch Laserablation bekannt. Dies kann unter Zuführung von Gas an die Oberfläche erfolgen, um die Zusammensetzung eines dort gebildeten Plasmas zu beeinflussen. Ein solches Gas kann z. B. Wasserstoff enthalten. Durch die Laserenergie eines ultravioletten Laserpulses und das jeweilige Gas an der Oberfläche können die chemischen Eigenschaften der Oberfläche verändert werden.

### AUFGABE DER ERFINDUNG

Der Erfindung liegt die Aufgabe zugrunde, ein Verfahren zum Abtragen von Material von einem Formkörper aus einem SiO₂-basierten Material mit intensivem Licht aufzuzeigen, das ohne Verunreinigung einer Oberfläche, an der der Abtrag erfolgen soll, die Abtragschwelle, d. h. die Energieflächendichte für das intensive Licht, deutlich herabsetzt, so dass auch im sichtbaren Bereich und in weiten Teilen des UV-Bereichs transparente Gläser durch Energieeintrag mit durch handelsübliche Laser verfügbares intensives Licht mit hoher räumlicher Auflösung strukturiert werden können.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Bei einem Verfahren zum Abtragen von Material von einem Formkörper aus einem SiO₂-basierten Material mit intensivem Licht wird, bevor das intensive Licht auf eine Oberfläche des Formkörpers gerichtet wird, die Absorption des intensiven Lichts durch das Material an der Oberfläche dadurch erhöht, dass atomarer Wasserstoff in die Oberfläche eingebracht wird.

Es hat sich herausgestellt, dass es möglich ist, atomaren Wasserstoff mit vertretbarem Aufwand in eine Oberfläche eines Formkörpers aus einem für intensives Licht an sich transparenten Material einzubringen, um dadurch die Absorption des intensiven Lichts durch das Material, insbesondere vorübergehend, zu erhöhen. Nach dieser Erhöhung kann das Material mit dem intensiven Licht direkt, d. h. ohne die Verwendung einer die Absorption des Lichts sicherstellenden zusätzlichen Substanz, von der Oberfläche abgetragen werden.

Konkret ist es mittels des eingebrachten Wasserstoffs möglich, die Absorption des intensiven Lichts durch das SiO₂-basierte Material um mindestens 25 % zu erhöhen. Aller meistens kann die Absorption auch um mindestens 33 %, häufig um mindestens 50 % und oftmals auch um mindestens 100 % erhöht werden. Darüber hinaus gehend sind auch Erhöhungen der Absorption um einen Faktor 3, 5 oder sogar 10 möglich. Es versteht sich, dass diese Erhöhung neben der Menge des eingebrachten atomaren Wasserstoffs von der oder den Wellenlänge(n) des intensiven Lichts und von dem Material selbst abhängt. Besonders große Erhöhungen der Absorption des intensiven Lichts lassen sich für Licht solcher Wellenlänge erreichen, das nahe der absorptionsschwachen Seite einer bei den meisten SiO₂-basierten Materialien zu kürzeren Wellenlängen hin auftretenden Absorptionsschwelle liegt. Derartiges Licht wird vor dem Einbringen des atomaren Wasserstoffs in aller Regel nicht ausreichend absorbiert, um einen kontrollierten Abtrag von Material an einer Oberfläche herbeizuführen. Ein solcher Abtrag ist aber nach dem Einbringen des Wasserstoffs in der Regel problemlos möglich.

Mit der zunehmenden Absorption des intensiven Lichts wird auch die Abtragschwelle der Energieflächendichte des intensiven Lichts an der Oberfläche des Materials mittels des eingebrachten Wasserstoffs abgesenkt. Typischerweise erfolgt diese Absenkung um mindestens 25 %, vorzugsweise um mindestens 33 %, mehr bevorzugt um mindestens 50 % und am meisten bevorzugt um mindestens 67 %. Dabei bedeutet die Absenkung um mindestens 67 %, dass die Abtragschwelle anschließend nur noch weniger als ein Drittel ihres ursprünglichen Werts beträgt.

Neben der Erhöhung der Absorption des intensiven Lichts und der Absenkung der Abtragschwelle der Energieflächendichte des intensiven Lichts an der Oberfläche kann der Effekt des in die Oberfläche eingebrachten atomaren Wasserstoffs auch durch eine Verschiebung der Absorptionskante des jeweiligen SiO₂-basierten Materials beschrieben werden. Diese Verschiebung beträgt typischerweise mindestens 20 nm, vorzugsweise mindestens 40 nm, mehr bevorzugt mindestens 60 nm und am meisten bevorzugt mindestens 80 nm hin zu längeren Wellenlängen.

Besonders bevorzugt sind Ausführungsformen des erfindungsgemäßen Verfahrens, bei denen der Wasserstoff bei Atmosphärendruck in die Oberfläche eingebracht wird. Damit ist es nicht erforderlich, den jeweiligen Formkörper in irgendeine Druck- oder Unterdruckkammer einzubringen.

Eine äußerst effektive Form der Einbringung des atomaren Wasserstoffs in die Oberfläche bei Atmosphärendruck besteht in einem wasserstoffhaltigen Plasma, das an der Oberfläche bereitgestellt wird. Dieses wasserstoffhaltige Plasma kann zudem zur Bildung von Siliziumsuboxiden an der Oberfläche führen, von denen bekannt ist, dass sie die Absorption von Licht durch SiO₂-basierte Materialien erhöhen. Hierauf beruht der grundsätzliche Effekt der vorliegenden Erfindung jedoch nicht. Der durch Siliziumsuboxid erreichte Anstieg bei der Absorption von intensivem Licht geht während des Abtrags von der jeweiligen Oberfläche verloren, da sich die Siliziumsuboxidspezies nach einer Plasmabehandlung auf die äußeren Schichten der Oberfläche beschränken und nicht kurzfristig neu bilden können. Der atomare Wasserstoff dringt jedoch weiter in die Oberfläche ein und ist dort auch in größeren Tiefen nachweisbar, was mit der erfindungsgemäß stark erhöhten Abtragsrate auch in der Tiefe der Oberfläche konform geht.

Ein wasserstoffhaltiges Plasma zum Einbringen des atomaren Wasserstoffs in die jeweilige Oberfläche ist vorzugsweise ein nichtthermisches Plasma, d. h. insbesondere ein kaltes Plasma, was Gastemperaturen von mehr als 50°C ausschließt. Das Plasma an der Oberfläche bedeutet damit keine thermische Belastung des Materials des Formkörpers, sondern seine Funktion konzentriert sich auf das Einbringen des atomaren Wasserstoffs in die jeweilige Oberfläche.

Ein wasserstoffhaltiges Plasma ist leicht durch Zündung in einem wasserstoffhaltigen Prozessgas bereitstellbar. Dabei weist das Prozessgas vorzugsweise Wasserstoffgas auf. Grundsätzlich kann Wasserstoff auch durch beispielsweise eine Kohlenwasserstoffverbindung in das Plasma eingebracht werden. Doch besteht dann die Gefahr einer Verunreinigung der Oberfläche durch andere Spezies als Wasserstoff aus dem Plasma.

Neben Wasserstoffgas kann das Prozessgas, in dem das Plasma gezündet wird, ein inertes Gas aufweisen. Dabei kann es sich zum Beispiel um Stickstoffgas handeln. Ein explosionssicheres Gemisch aus Wasserstoffgas und Stickstoffgas ist als Formiergas bekannt. Hierbei handelt es sich um ein geeignetes Prozessgas, um darin ein Plasma zu zünden, mit dessen Hilfe atomarer Wasserstoff in eine Oberfläche eines SiO₂-basierten Materials eingebracht werden kann.

Bei der Durchführung des erfindungsgemäßen Verfahrens kann die Oberfläche, auf die das intensive Licht gerichtet wird, einer Strahlungsquelle für das intensive Licht zugewandt sein. Es ist aber auch möglich, das intensive Licht durch den jeweiligen Formkörper hindurch an der Oberfläche zu fokussieren. Hierbei macht sich positiv bemerkbar, dass der in die eine Oberfläche eingebrachte atomare Wasserstoff häufig zwar auch in oberflächenferne Bereiche des Materials eindringt, aber dabei die gegenüberliegende Oberfläche des Formkörpers nicht unbedingt mit gleicher Konzentration erreicht. Beim Fokussieren des intensiven Lichts durch den Formkörper an der Oberfläche, an der der Abtrag des Material erwünscht ist, trifft das intensive Licht daher erst nahe der Oberfläche auf Material, das aufgrund seines erhöhten Gehalts an atomarem Wasserstoff eine erhöhte Absorption für das Licht aufweist. So wird ein unerwünschter Abtrag von Material an der gegenüberliegenden Oberfläche, durch die das intensive Licht eingekoppelt wird, zuverlässig verhindert.

Im Regelfall wird es sich bei dem intensiven Licht um fokussierte Laserstrahlung handeln, die in Pulsen auf die Oberfläche gerichtet wird, wobei jeder Puls einen Abtrag von Material verursacht. Das intensive Licht kann auch in beispielsweise mit einer Maske strukturierten Form auf die zu bearbeitende Oberfläche gerichtet werden. Grundsätzlich kann auch die Plasmabehandlung der Oberfläche mit einer Maske strukturiert werden.

Der Materialabtrag von dem Formkörper an dessen Oberfläche kann insbesondere zur Strukturierung der Oberfläche des Formkörpers vorgesehen sein. Dabei erweist es sich als vorteilhaft, dass sich durch den eingebrachten atomaren Wasserstoff eine sehr homogene Verteilung der aus dem intensiven Licht absorbierten Energie einstellt. Zumindest sind nach dem erfindungsgemäßen Verfahren mit intensivem Laserlicht in eine Oberfläche eines SiO₂-basierten Materials eingebrachte Strukturen sehr formtreu, und sie weisen eine nur geringe Oberflächenrauhigkeit auf.

Wie bereits angedeutet wurde, handelt es sich bei dem SiO₂-basierten Material des Formkörpers insbesondere um Glas. Besonders einfach und vorteilhaft erweist sich die Durchführung des erfindungsgemäßen Verfahrens bei Quarzglas. Hierbei kann die Abtragschwelle der Energieflächendichte von Laserstrahlung einer Wellenlänge von 193 nm auf weniger als ein Vierteil ihres Ausgangswerts reduziert werden.

Der atomare Wasserstoff stellt in vielen SiO₂-basierten Materialien keinen störenden zusätzlichen Bestandteil dar. Zudem kann er nach dem Bestrahlen des Formkörpers mit dem intensiven Licht thermisch aus dem Material ausgetrieben werden. Das heißt, durch Tempern des Materials in einer wasserstoffarmen Umgebung sinkt der Wasserstoffgehalt des Materials wieder ab. Am Ende des Erfindungsgemäßen Verfahrens steht dann ein Material, das dieselben oder zumindest fast dieselben optischen Eigenschaften aufweist wie das Ausgangsmaterial.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: illustriert schematisch das Einbringen von atomarem Wasserstoff in die Oberfläche eines Formkörpers mit Hilfe eines aus einem Plasmastromgenerator austretenden wasserstoffhaltigen Plasmas bei Raumtemperatur und Atmosphärendruck.
- **Fig. 2**: illustriert eine Möglichkeit des Abtragens von Material von der Oberfläche des Formkörpers gemäß Fig. 1 mit fokussierter Laserstrahlung.
- **Fig. 3**: skizziert eine weitere Möglichkeit des Abtragens von Material von der Oberfläche des Formkörpers gemäß Fig. 1 mit hier durch den transparenten Formkörper hindurch auf die Oberfläche fokussierter Laserstrahlung.
- **Fig. 4**: zeigt den Verlauf der Transmission des Materials des Formkörpers gemäß Fig. 1 in Prozent über der Wellenlänge nach verschieden langen Plasmabehandlungen, wobei zum Vergleich der Transmissionsverlauf des unbehandelten Materials dargestellt ist.
- **Fig. 5**: zeigt den Verlauf der Transmission desselben Materials wie in Fig. 4 nach Tempern des plasmabehandelten Materials für unterschiedliche lange Zeiträume im Vergleich zu dem ungetemperten plasmabehandelten Material.
- **Fig. 6**: gibt die Wasserstoffkonzentration in Prozent nach der Plasmabehandlung in Abhängigkeit von der Tiefe der Oberfläche für plasmabehandeltes und nicht plasmabehandeltes Material wieder.
- **Fig. 7**: gibt die Stöchiometrieänderung von SiOx in Abhängigkeit der Tiefe der Oberfläche bei plasmabehandeltem und nicht plasmabehandeltem Material wieder.
- **Fig. 8**: zeigt einen Querschnitt durch einen Bereich, in dem mit fokussierter Laserstrahlung ein Abtrag von Material gemäß Fig. 2 herbeigeführt wurde, nachdem das Material gemäß Fig. 1 laserbehandelt wurde; und
- **Fig. 9**: zeigt einen Fig. 8 entsprechenden Querschnitt nach Abtrag von Material mit fokussierter Laserstrahlung von einem nicht plasmabehandeltem Material.

### FIGURENBESCHREIBUNG

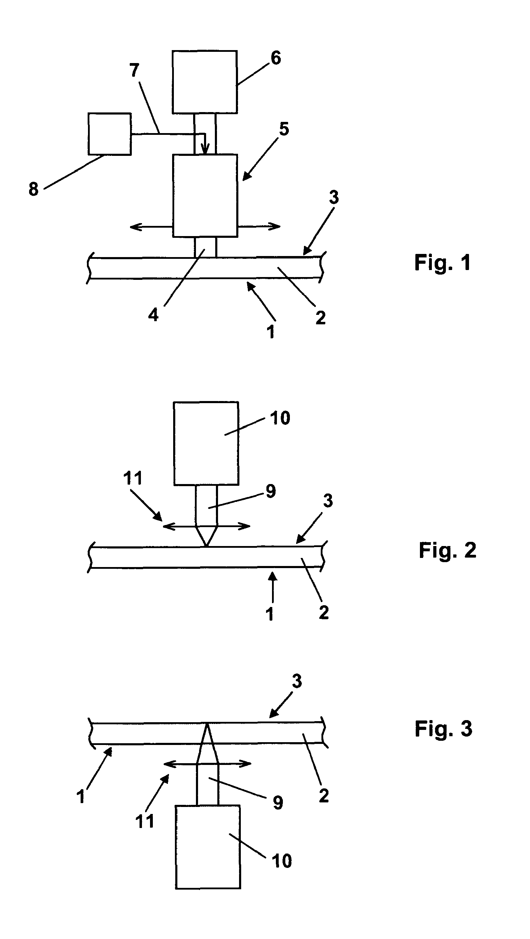

**Fig. 1** illustriert die Behandlung eines Formkörpers 1 aus SiO₂-basiertem Material 2 an einer Oberfläche 3 mit einem Plasma 4. Das Plasma 4 wird mit einem Plasmastromgenerator 5 bereitgestellt, in dem eine mit einem Wechselhochspannungsgenerator 6 bereitgestellte Wechselhochspannung eine dielektrisch behinderte Entladung in einem Prozessgas 7 von einer Gasquelle 8 hervorruft. Das so durch die Gasentladung generierte Plasma 4 wird mit der Strömung des Prozessgases 7 durch den Plasmastromgenerator 5 auf die Oberfläche 3 hin ausgestoßen. Bei dem Prozessgas 7 handelt es sich um Formiergas aus 90 % Stickstoffgas und 10 % Sauerstoffgas. Das Plasma 4 weist durch Dissoziierung von Wasserstoffgas atomaren Wasserstoff auf, der in die Oberfläche 3 eindringt. Dies geschieht mit Hilfe des wasserstoffhaltigen Plasmas 4 bei Atmosphärendruck und Raumtemperatur. Pfeile neben dem Plasmastromgenerator 5 deuten an, dass der Plasmastromgenerator 5 gegenüber dem Formkörper 2 verfahren werden kann, um seine gesamte Oberfläche 3 mit dem Plasma 4 zu behandeln. Wo genau die Behandlung der Oberfläche 3 mit dem Plasma 4 erfolgt, hängt davon ab, wo die Oberfläche nachfolgend weiter bearbeitet werden soll.

**Fig. 2** zeigt, wie anschließend an die Plasmabehandlung gemäß Fig. 1 Laserstrahlung 9 von einem Laser 10 mit einem Objektiv 11 auf die Oberfläche 3 fokussiert wird, um von dieser Oberfläche 3 Material 2 abzutragen.

Alternativ zu der Anordnung gemäß Fig. 2 kann die Laserstrahlung 9 auch durch das Material 2 hindurch auf die plasmabehandelte Oberfläche 3 fokussiert werden, wie dies in **Fig. 3** illustriert ist.

Beim Abtrag von Material 2 an der plasmabehandelten Oberfläche 3 mittels der fokussierten Laserstrahlung 9 gemäß Fig. 2 oder 3 macht sich der in die Oberfläche 3 eingebrachte Wasserstoff positiv bemerkbar. Konkret erhöht er nahe der sogenannten Absorptionskante die Absorption der Laserstrahlung in solchem Maße, dass Laserstrahlung, die durch unbehandeltes Material 2 nicht oder nur bei sehr hoher Intensität in einem für einen Abtrag von Material ausreichenden Maße von dem Material 2 absorbiert wird, nach der Plasmabehandlung in einem für einen kontrollierten Abtrag von Material mit der Laserstrahlung völlig ausreichenden Maße absorbiert wird.

Trotz der sich aufgrund der hohen Mobilität von atomarem Wasserstoff in dem Material 2 selbst bei Raumtemperatur auch in die Tiefe der Oberfläche erstreckenden Erhöhung der Wasserstoffkonzentration aufgrund der Plasmabehandlung gemäß Fig. 1 ist bei dem erfindungsgemäßen Verfahren ein Abtrag mit durch das Material 2 hindurch auf seine behandelte Oberfläche 3 fokussierter Laserstrahlung gemäß Fig. 3 mit deutlich verringerter Gefahr eines ungewollten Abtrags auch an der dem Laser 10 zugewandten Oberfläche des Formkörpers 1 problemlos möglich, weil sich die Erhöhung der Wasserstoffkonzentration zumindest nicht in gleichem Maße bis an die der Oberfläche 3 gegenüberliegende Oberfläche des Formkörpers 2 fortsetzt. Zudem ist eine durch die Plasmabehandlung reduzierte Energieflächendichte der Laserstrahlung 9 an der Oberfläche 3, ab der ein signifikanter Abtrag von Material 2 erfolgt und die auch als Abtragschwelle bezeichnet wird, auch schärfer definiert als vor der Plasmabehandlung, so dass die noch nicht fokussierte Laserstrahlung 9 auch deshalb vor ihrer Fokussierung an der Oberfläche 3 keinen ungewollten Abtrag von Material 2 hervorruft.

Der Abtrag von Material 2 mit der Laserstrahlung 9 gemäß Figur 2 oder 3 könnte grundsätzlich zeitgleich mit der Plasmabehandlung gemäß Figur 1 erfolgen. Die Plasmabehandlung wird jedoch vorzugsweise für einige, bspw. 15 Minuten, an allen zu bearbeitenden Stellen durchgeführt, während die Bearbeitung mit der Laserstrahlung binnen eines Zeitraums von wenigen Sekunden erfolgen kann. Zudem ist der Effekt der Plasmabehandlung, d. h. der erhöhte Wasserstoffgehalt, von ausreichender Dauer, um beide Verfahrensschritte zeitlich zu trennen. Diese Trennung kann ohne weiteres mehrere Stunden, Tage oder gar Wochen betragen.

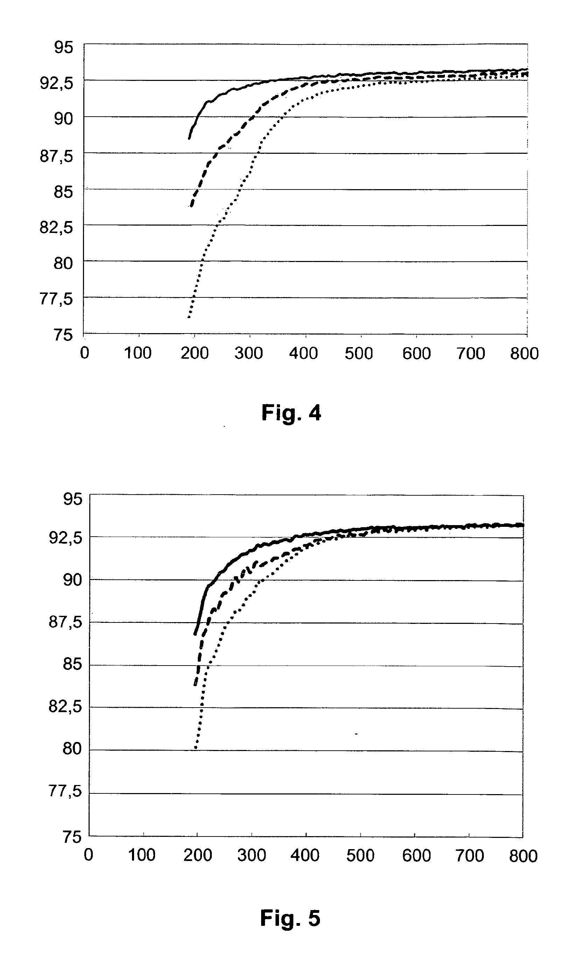

**Fig. 4** illustriert den Transmissionsverlauf in Prozent über der Wellenlänge für ein SiO₂-basiertes Material im unbehandelten Zustand (obere durchgezogene Kurve) im Vergleich zu dem Transmissionsverlauf desselben Materials nach 5-minütiger Plasmabehandlung (mittlere gestrichelte Kurve) sowie 15-minütiger Plasmabehandlung (untere punktierte Kurve). Aus dem Transmissionsverlauf des unbehandelten Materials ist zu erkennen, dass seine Absorptionskante zwischen 300 nm und 200 nm einsetzt. Diese Absorptionskante wird durch die Plasmabehandlung zunehmend nach längeren Wellenlängen hin verschoben. Diese Verschiebung der Absorptionskante beträgt hier nach 5 Minuten Plasmabehandlung etwa 80 nm und nach 15 Minuten Plasmabehandlung etwa 120 nm. Damit wird ein kontrollierter Abtrag von Material bei längeren Wellenlängen möglich, und bei diesen Wellenlängen arbeitende Laser für den Materialabtrag einsetzbar. Konkret wird die Absorption für Laserstrahlung einer Wellenlänge von 193 nm, wie sie beispielsweise von einem ArF Excimer Laser bereitgestellt wird, durch die Plasmabehandlung für 15 Minuten weit mehr als verdoppelt. Die aus Fig. 4 unmittelbar entnehmbare Abnahme der Transmission geht überwiegend auf diese Zunahme der Absorption zurück, während die zusammen mit der Absorption das Komplement der dargestellten Transmission bildende Reflektion des Materials im unbehandelten Zustand des Materials dominiert und bei der Plasmabehandlung im wesentlichen gleich bleibt. Mit der Zunahme der Absorption geht eine Absenkung der Energieflächendichte an der Oberfläche 3 gemäß den Fig. 1 bis 3 einher, ab der ein signifikanter Abtrag von Material erfolgt und die auch als Abtragschwelle bezeichnet wird.

**Fig. 5** zeigt den Transmissionsverlauf in Prozent über der Wellenlänge für das 15 Minuten plasmabehandelte Material gemäß Fig. 4 (untere punktierte Kurve) im Vergleich zu demselben Material nach Tempern für 24 Stunden (mittlere gestrichelte Kurve) und Tempern für 48 Stunden (obere durchgezogene Kurve). Das Tempern in einer wasserstoffarmen Umgebung führt offensichtlich dazu, dass sich der Transmissionsverlauf durch Austreiben von Wasserstoff aus dem Material wieder dem ursprünglichen Transmissionsverlauf (Fig. 4, obere durchgezogene Kurve) annähert. Die für den vereinfachten Abtrag von Material mittels Laserstrahlung erhöhte Konzentration von atomarem Wasserstoff in dem Material ist also reversibel. Anders gesagt ist das Material nach dem erfindungsgemäßen Abtrag problemlos wieder in einen dem Ursprungszustand nahen Zustand überführbar.

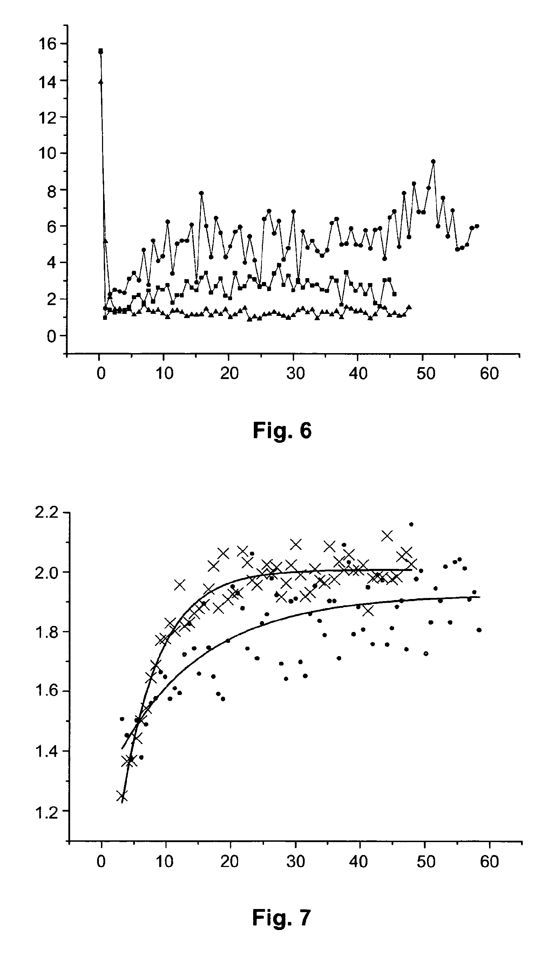

**Fig. 6** ist eine Darstellung der Wasserstoffkonzentration in Prozent über der Tiefe der plasmabehandelten Oberfläche in Nanometern für unbehandeltes Material (Messwerte durch Dreiecke wiedergegeben) im Vergleich zu für 5 Minuten behandeltes Material (Messwerte in Quadraten) und für 15 Minuten behandeltes Material (Messwerte in Kreisen). Zu sehen ist, dass die Wasserstoffkonzentration ansteigt, und zwar im Vergleich zu dem unbehandelten Material auch in der Tiefe der Oberfläche. Dargestellt ist zwar nur der bei der Messung erreichbare Bereich bis 60 nm. Der sehr flache Verlauf der Konzentration deutet aber zumindest keinen sich bald anschließenden Abfall an. Dies ist damit konsistent, dass bei dem erfindungsgemäßen Verfahren auch in der Tiefe der Oberfläche, d. h. bei anhaltendem Abtrag von Material, eine verbesserte Absorption der eingesetzten Laserstrahlung und eine entsprechend erheblich reduzierte Abtragschwelle beobachtet werden.

**Fig. 7** zeigt im Vergleich den Stöchiometrieverlauf von SiOx über der Tiefe der Oberfläche in Nanometern für unbehandeltes Material (Messwerte als Kreuze wiedergegeben) und plasmabehandeltes Material (Messwerte als Kreise wiedergegeben). Durch die Plasmabehandlung wird zwar eine signifikante Stöchiometrieänderung in geringer Tiefe der Oberfläche beobachtet. Diese Stöchiometrieänderung zu sogenannten Siliziumsuboxidspezies, die bekanntermaßen eine erhöhte Absorption von Laserstrahlung aufweisen sollen, nimmt aber mit der Tiefe der Oberfläche relativ schnell ab. Trotz der erheblichen Streuung der Einzelwerte scheint sich zwar auch in der größeren Tiefe eine Stöchiometrieänderung aufgrund der Plasmabehandlung zu manifestieren. Diese Stöchiometrieänderung lässt sich aber statt durch eine Reduktion von SiO₂ unter tatsächlicher Entfernung von Sauerstoff zu Siliziumsuboxidspezies auch durch eine lokale Umlagerung von Sauerstoff an den eingebrachten Wasserstoff erklären. Zudem ist sie für sich genommen zu gering, um zu erklären, warum bei einem erfindungsgemäßen Verfahren auch noch in größerer Tiefe der Oberfläche Material deutlich leichter abgetragen wird, als bei unbehandeltem Material. Diese Erklärung gibt nur der in die Oberfläche eingebrachte Wasserstoff. Diese Interpretation der Fig. 6 und 7 geht mit den Erkenntnissen konform, dass die bei dem erfindungsgemäßen Verfahren ausgenutzten Effekte der Plasmabehandlung davon abhängig sind, dass das Plasma tatsächlich wasserstoffhaltig ist, und mit einem thermischen Austreiben des Wasserstoffs wieder zurückgehen (siehe Fig. 5).

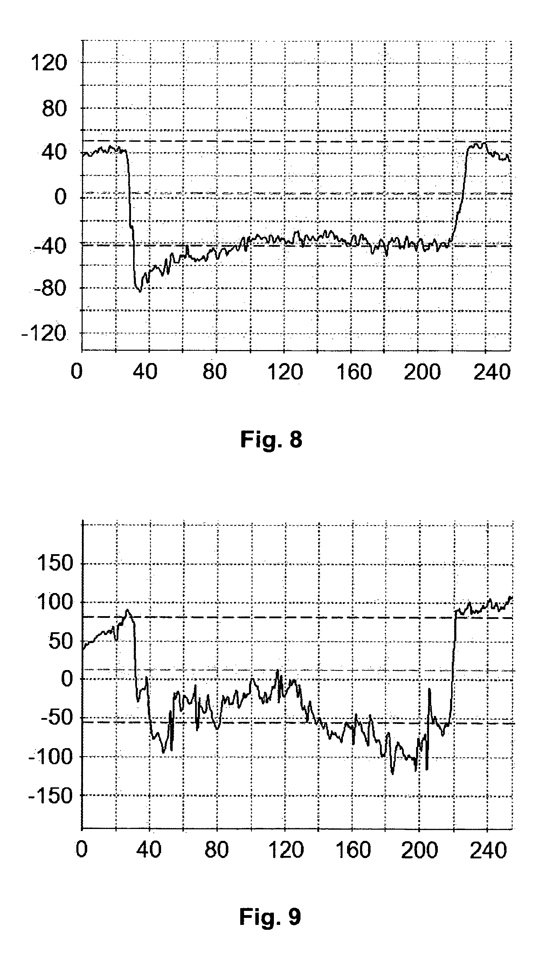

Der Querschnitt durch einen Bereich, aus dem Material mit dem erfindungsgemäßen Verfahren abgetragen wurde, gemäß **Fig. 8** zeigt einen vergleichsweise glatten Oberflächenverlauf. Anders gesagt wird der Fokusbereich der Laserstrahlung mit hoher Formtreue durch den erzielten Abtrag wiedergegeben. Demgegenüber ist der Oberflächenverlauf, der in **Fig. 9** bei einem Schnitt durch einen Bereich dargestellt ist, der ohne vorherige Plasmabehandlung desselben Materials abgetragen wurde, viel größer. Absolut ist der Bereich gemäß Fig. 9 zwar tiefer als der Bereich gemäß Fig. 8, da beide Bereiche jedoch mit einer Energieflächendichte eines Pulses der eingesetzten Laserstrahlung nahe der jeweiligen Abtragschwelle ausgebildet wurden, die bei dem plasmabehandelten Material viel tiefer liegt, bedeutet dies keinen Nachteil des erfindungsgemäßen Verfahrens, sondern weist nur darauf hin, dass mit ihm feinere Strukturen in die Oberfläche eingearbeitet werden können bzw. dass mit höherer Genauigkeit in der Tiefe die Oberfläche strukturiert werden kann.

Die in den Fig. 4 bis 9 wiedergegebenen Messwerte beziehen sich auf verschiedene Quarzgläser. Entsprechende Messwerte konnten auch für andere Gläser aus SiO₂-basiertem Material, wie beispielsweise Schwerflintglas und Bariumkronglas, erzielt werden. Dabei wirkt sich naturgemäß eine andere ursprüngliche Lage der natürlichen Absorptionskante des Materials auf den bei einer bestimmten Wellenlänge des eingesetzten intensiven Lichts erzielbaren Effekt aus.

### BEZUGSZEICHENLISTE

- 1: Formkörper
- 2: Material
- 3: Oberfläche
- 4: Plasma
- 5: Plasmastromgenerator
- 6: Wechselhochspannungsgenerator
- 7: Prozessgas
- 8: Gasquelle
- 9: Laserstrahlung
- 10: Laser
- 11: Objektiv

## Patentansprüche

1. Verfahren zum Abtragen von Material (2) von einem Formkörper (1) aus einem SiO₂-basierten Material (2) mit intensivem Licht, wobei, bevor das intensive Licht auf eine Oberfläche (3) des Formkörpers (1) gerichtet wird, die Absorption des intensiven Lichts durch das Material (2) an der Oberfläche (3) erhöht wird, **dadurch gekennzeichnet, dass** zum Erhöhen der Absorption des intensiven Lichts durch das Material (2) atomarer Wasserstoff in die Oberfläche (3) eingebracht wird.

2. Verfahren nach Anspruch 1, **dadurch gekennzeichnet, dass** die Absorption des intensiven Lichts durch das Material (2) mittels des eingebrachten Wasserstoffs um mindestens 25 %, vorzugsweise mindestens 33 %, mehr bevorzugt mindestens 50 %, noch mehr bevorzugt mindestens 100 %, noch mehr bevorzugt mindestens 200 %, noch mehr bevorzugt mindestens um einen Faktor 5 und am meisten bevorzugt mindestens um einen Faktor 10 erhöht wird.

3. Verfahren nach Anspruch 1 oder 2, **dadurch gekennzeichnet, dass** Abtragschwelle der Energieflächendichte des intensiven Lichts an der Oberfläche (3) des Materials (2) mittels des eingebrachten Wasserstoffs um mindestens 25 %, vorzugsweise mindestens 33 %, mehr bevorzugt mindestens 50 % und am meisten bevorzugt mindestens 67 % abgesenkt wird.

4. Verfahren nach einem der vorhergehenden Ansprüche, **dadurch gekennzeichnet, dass** eine Absorptionskante des Materials (2) mittels des eingebrachten Wasserstoffs um mindestens 20 nm, vorzugsweise mindestens 40 nm, mehr bevorzugt mindestens 60 nm und am meisten bevorzugt mindestens 80 nm zu längeren Wellenlängen hin verschoben wird.

5. Verfahren nach einem der vorhergehenden Ansprüche, **dadurch gekennzeichnet, dass** der Wasserstoff bei Atmosphärendruck in die Oberfläche (3) eingebracht wird.

6. Verfahren nach einem der vorhergehenden Ansprüche, **dadurch gekennzeichnet, dass** der Wasserstoff aus einem wasserstoffhaltigen Plasma (4) in die Oberfläche (3) eingebracht wird.

7. Verfahren nach Anspruch 6, **dadurch gekennzeichnet, dass** das Plasma (4) ein nichtthermisches Plasma ist.

8. Verfahren nach Anspruch 7, **dadurch gekennzeichnet, dass** das Plasma (4) eine Gastemperatur von maximal 50°C aufweist.

9. Verfahren nach einem der Ansprüche 6 bis 8, **dadurch gekennzeichnet, dass** das Plasma (4) in einem wasserstoffhaltigen Prozessgas (7) gezündet wird.

10. Verfahren nach Anspruch 9, **dadurch gekennzeichnet, dass** das Prozessgas (7) Wasserstoffgas und ein inertes Gas aufweist.

11. Verfahren nach einem der vorhergehenden Ansprüche, **dadurch gekennzeichnet, dass** das intensive Licht durch den Formkörper (1) hindurch an der Oberfläche (3) fokussiert wird.

12. Verfahren nach einem der vorhergehenden Ansprüche, **dadurch gekennzeichnet, dass** das intensive Licht fokussierte Laserstrahlung (9) ist.

13. Verfahren nach einem der vorhergehenden Ansprüche, **dadurch gekennzeichnet, dass** die Oberfläche (3) des Formkörpers (1) durch den Materialabtrag strukturiert wird.

14. Verfahren nach einem der vorhergehenden Ansprüche, **dadurch gekennzeichnet, dass** das Material (2) ein Glas, insbesondere ein Quarzglas ist.

15. Verfahren nach einem der vorhergehenden Ansprüche, **dadurch gekennzeichnet, dass** der Wasserstoff nach dem Bestrahlen des Formkörpers (1) mit dem intensiven Licht thermisch aus dem Material (2) ausgetrieben wird.

## Claims

1. Method of removing material (2) from a shaped body (1) made of an SiO₂-based material (2) using intensive light, wherein, prior to directing the intensive light onto a surface (3) of the shaped body (2), the absorption of the intensive light by the material (2) is increased at the surface (3), **characterised in that** atomic hydrogen is introduced into the surface (3) for increasing the absorption of the intensive light by the material (2).

2. Method of claim 1, **characterised in that**, by means of the introduced hydrogen, the absorption of the intensive light by the material (2) is increased by at least 25 %, preferably at least 33 %, more preferably at least 50 %, even more preferably at least 100 %, even more preferably at least 200 %, even more preferably at least by a factor of 5 and most preferably at least by a factor of 10.

3. Method of claim 1 or 2, **characterised in that**, by means of the introduced hydrogen, an ablation threshold of the energy surface density of the intensive light at the surface (3) of the material (2) is reduced by at least 25 %, preferably at least 33 %, more preferably at least 50 % and most preferably at least 67 %.

4. Method of any of the preceding claims, **characterised in that**, by means of the introduced hydrogen, an absorption edge of the material (2) is shifted towards higher wavelengths by at least 20 nm, preferably at least 40 nm, more preferably at least 60 nm and most preferably at least 80 nm.

5. Method of any of the preceding claims, **characterised in that** the hydrogen is introduced into the surface (3) at atmospheric pressure.

6. Method of any of the preceding claims, **characterised in that** the hydrogen in introduced into the surface (3) out of an hydrogen containing plasma (4).

7. Method of claim 6, **characterised in that** the plasma (4) is a non-thermal plasma.

8. Method of claim 7, **characterised in that** the plasma (4) has a gas temperature of 50 °C at maximum.

9. Method of any of the claims 6 to 8, **characterised in that** the plasma (4) is ignited in a hydrogen containing process gas (7).

10. Method of claim 9, **characterised in that** the process gas (7) comprises hydrogen gas and an inert gas.

11. Method of any of the preceding claims, **characterised in that** the intensive light is focused at the surface (3) through the shaped body (1).

12. Method of any of the preceding claims, **characterised in that** the intensive light is focused laser irradiation (9).

13. Method of any of the preceding claims, **characterised in that** the surface (3) of the shaped body (1) is structured by means of the material removal.

14. Method of any of the preceding claims, **characterised in that** the material (2) is a glass, particularly quartz glass.

15. Method of any of the preceding claims, **characterised in that** the hydrogen, after irradiating the shaped body (1) with the intensive light, is thermally driven out of the material (2).

## Revendications

1. Procédé d'enlèvement de matière (2) à partir d'un corps moulé (1) constitué d'une matière à base de SiO₂ (2) avec une lumière intense, dans lequel, avant que la lumière intense soit dirigée sur une surface (3) du corps moulé (1), l'absorption de la lumière intense par la matière (2) sur la surface (3) est augmentée, **caractérisé en ce que** pour augmenter l'absorption de la lumière intense par la matière (2), de l'hydrogène atomique est introduit dans la surface (3).

2. Procédé selon la revendication 1, **caractérisé en ce que** l'absorption de la lumière intense par la matière (2) est augmentée, au moyen de l'hydrogène introduit, d'au moins 25 %, de façon préférée d'au moins 33 %, de façon plus préférée d'au moins 50 %, de façon encore plus préférée d'au moins 100 %, de façon encore plus préférée d'au moins 200 %, de façon encore plus préférée d'au moins un facteur de 5 et de façon la plus préférée au moins d'un facteur de 10.

3. Procédé selon la revendication 1 ou 2, **caractérisé en ce que** le seuil d'enlèvement de la densité surfacique d'énergie de la lumière intense sur la surface (3) de la matière (2) est diminué, au moyen de l'hydrogène introduit, d'au moins 25 %, de façon préférée d'au moins 33 %, de façon plus préférée d'au moins 50 % et de façon la plus préférée d'au moins 67 %.

4. Procédé selon l'une des revendications précédentes, **caractérisé en ce qu'**un bord d'absorption de la matière (2) est décalé vers des longueurs d'ondes plus longues, au moyen de l'hydrogène introduit, d'au moins 20 nm, de façon préférée d'au moins 40 nm, de façon plus préférée d'au moins 60 nm et de façon la plus préférée d'au moins 80 nm.

5. Procédé selon l'une des revendications précédentes, **caractérisé en ce que** l'hydrogène est introduit dans la surface (3) à la pression atmosphérique.

6. Procédé selon l'une des revendications précédentes, **caractérisé en ce que** l'hydrogène est introduit dans la surface (3) à partir d'un plasma hydrogéné (4).

7. Procédé selon la revendication 6, **caractérisé en ce que** le plasma (4) est un plasma non thermique.

8. Procédé selon la revendication 7, **caractérisé en ce que** le plasma (4) présente une température de gaz maximale de 50 °C.

9. Procédé selon l'une des revendications 6 à 8, **caractérisé en ce que** le plasma (4) est allumé dans un gaz de traitement hydrogéné (7).

10. Procédé selon la revendication 9, **caractérisé en ce que** le gaz de traitement (7) présente du gaz hydrogène et un gaz inerte.

11. Procédé selon l'une des revendications précédentes, **caractérisé en ce que** la lumière intense est focalisée sur la surface (3) à travers le corps moulé (1).

12. Procédé selon l'une des revendications précédentes, **caractérisé en ce que** la lumière intense est un rayon laser focalisé (9).

13. Procédé selon l'une des revendications précédentes, **caractérisé en ce que** la surface (3) du corps moulé (1) est structurée par l'enlèvement de matière.

14. Procédé selon l'une des revendications précédentes, **caractérisé en ce que** la matière (2) est un verre, en particulier un verre de quartz.

15. Procédé selon l'une des revendications précédentes, **caractérisé en ce que** l'hydrogène est éliminé de la matière (2) par voie thermique après que la lumière intense a été projetée sur le corps moulé (1).
